# EUROPEAN PATENT SPECIFICATION

(11) **EP 0 748 025 B1**
(45) Date of publication and mention of the grant of the patent: **04.10.2006**
(21) Application number: 96109068.5
(22) Date of filing: 05.06.1996
(51) Int. Cl.: H02K 1/12, H02K 3/34, H02K 15/00

(54) **Motor stator and method of manufacturing thereof**
Stator eines Motors und dessen Herstellung
Stator de moteur électrique et sa fabrication

(30) Priority: 07.06.1995 JP 14024595; 08.05.1996 JP 11342496
(43) Date of publication of application: 11.12.1996
(73) Proprietor: MATSUSHITA ELECTRIC INDUSTRIAL CO., LTD., Kadoma-shi, Osaka (JP)
(72) Inventor: Nakaguro, Keita, Minamiyama, Uji-shi (JP); Nishio, Seiji, Minato-ku, Osaka-shi (JP); Ogino, Hiroyuki, Matsubara-shi (JP)
(74) Representative: Leinweber & Zimmermann

(56) References cited:
- EP-A- 0 168 646
- EP-A- 0 629 034
- GB-A- 912 993
- US-A- 4 222 023
- PATENT ABSTRACTS OF JAPAN vol. 006, no. 077 (E-106), 14 May 1982 (1982-05-14) & JP 57 016543 A (HITACHI LTD), 28 January 1982 (1982-01-28)

## Description

### BACKGROUND OF THE INVENTION

The present invention relates to a stator of a motor adapted to be used in various kinds of industrial equipments, and to a method of manufacturing thereof.

### PRIOR ART

These years, the requisition of enhancing the density of windings in order to decrease the size of a motor and to enhance the performance thereof have been increased. In particular, as to A.C. servo-motor adapted to be used as a drive source for various industrial equipments such as a robot or an NC machine tool, it is required to use a magnet having a high magnetic flux density for a motor stator, and to increase the density of windings of the stator.

A conventionally known motor will be hereinbelow explained.

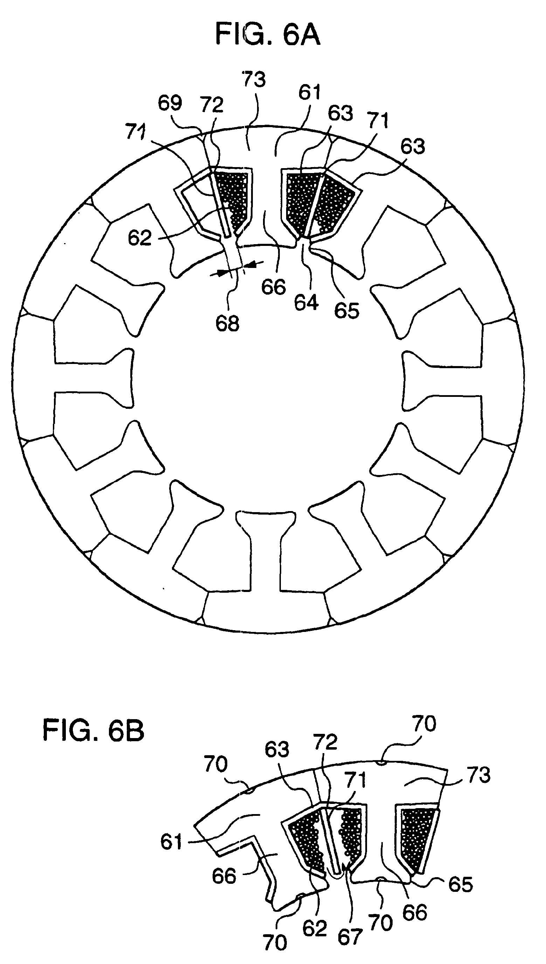

Referring to Figs. 6A and 6B which show a motor stator composed of a circumferentially segmented and laminated iron core, the core is composed of core segments 61, coils 62, molded insulator members 63, slot opening parts 64, slot side edge parts 65, coil winding parts 66 formed in the opposite sides thereof with recesses, annular coupling parts 69, laser welded parts 70, and interphase insulation sheets 71. Further, reference numeral 67 denotes insulation distances, 68 denotes a gap, and 72 denotes an adhesive. The coil winding part 66 of each of the circumferentially divided laminated iron core segments 61 is interposed between the molded insulator members 63, and windings are wound in alignment on the molded insulator members 63. The gaps 68 are defined in the slot opening part 64 in order to prevent a plurality of digital pole segments 73 each composed of the above-mentioned coil 62, from making contact with each other. Further, the poles of each adjacent coils are different from each other, and in order to ensure insulation between the adjacent coils, the interphase insulating sheets 71 are stuck and secured to parts of the molded insulator members 63, intervening between the adjacent coils 62.

However, the above-mentioned conventional stator has offered the following problems.

That is, if the molded insulator members 63 are a hard resin moldings, and if they project from the slot side edge parts 65 by a long length, the coupling between the digital pole segments 73 is hindered. On the contrary, if they are short, the insulation distance 67 between each coil 66 and the associated laminated iron core segment 61 becomes short, resulting in a low dielectric strength, and accordingly, the density of the windings cannot be increased, exceeding a predetermined value. The interphase insulation sheets 71 are adhered and secured at predetermined positions by the adhesive 72, and accordingly, the workability for securing the sheets 71 is low. Further, due to unevenness of adhering positions, the interphase insulation distances are unstable, and further, the dielectric strength is decreased, similar to that mentioned above, thereby, the density of windings cannot be increased, exceeding the predetermined value. Further, the digital pole segments 73 mounted thereon with the coils 63 each composed of the laminated core segment 61 on which windings are wound, are coupled to one another in a ring-like shape so as to complete the stator. However, there has been a risk such that windings wound in the digital pole segments 73 would be damaged during the above-mentioned process for completing the stator.

EP 0 629 034 A discloses a motor stator comprising the features of the preamble of claim 1.

### SUMMARY OF THE INVENTION

The present invention has been devised in order to solve the above-mentioned problems inherent to the conventional motor stator.

To this end, according to the present invention, there is provided a motor stator comprising a predetermined number of digital pole segments which are coupled together in a ring-like shape and which are each composed of a laminated iron core segment in which several steel plates are laminated and are welded integrally together at their inner and outer side edges and which has a coil winding part formed between the inner and outer diameter parts of the core segment and having recesses on opposite sides thereof, a coil composed of windings wound on the coil winding part, two resilient and flexible insulation sheets each one being interposed between the surface of the recess in a respective side of said coil winding part and the coil, for covering the outer exposed surface of the coil.

Accordingly, the insulation sheet as a single part in the present invention can cope with two parts of the above-mentioned conventional motor stators, that is, the molded insulator member and the interphase insulation sheet, and accordingly, the insulation distance and the interphase distance can be increased, thereby it is possible to increase the density of windings. Further, since the coils are wrapped with the insulation sheets, respectively, the coils can be protected by the insulation sheets, thereby it is possible to prevent the coils from being damaged.

Further, in the case of overlapping the end parts of flap sect:ions of each of the insulation sheets, the overlapped parts of the insulation sheet can be joined together by heat-welding or sticking, and accordingly, it can easily achieve the object of the present invention which aims at increasing the density of windings. Further, in order to facilitate the folding of the insulation sheets for wrapping the coils therewith, folding lines may be formed in the insulation sheets.

Further, in the case of the arrangement of the insulation sheet at a predetermined position with the use of insulating end panels located in the longitudinally opposite end parts of the laminated core segment, it is possible to prevent the insulation sheets from coming off from the digital pole member during manufacture of the stator.

According to a first aspect of the present invention, there is provided a motor stator composed of a predetermined number of digital pole segments coupled together in a ring-like shape, and each including a laminated core segment composed of several steel plates which are laminated together and integrally incorporated together by welding, and having an inner diameter part and an outer diameter part, and a coil winding part formed between the inner and outer diameter parts and formed in the opposite sides thereof with recesses, and two resilient and flexible insulation sheets located between the surface of the recesses of the coil winding part of the laminated core part and a coil, and covering the exposed surface of the coil. With this arrangement, the insulation distance and the interphase insulation distance can be increased, thereby it is possible to aim at increasing the density of windings and at protecting the windings.

Further, according to a first embodiment in the first aspect of the present invention, the coil is covered with the insulation sheet, and further, the opposite end parts of the insulation sheets are overlapped with each other.

According to a second embodiment in the first aspect of the present invention, in such a case that the insulation sheet is made of plastic so that it can be heat-welded, the overlapped parts thereof can be easily heat-welded, and according to a third embodiment thereof, the overlapped parts are stuck together by an adhesive.

Further, according to a fourth embodiment of the present invention, flap parts of the insulation sheet, externally projected from the coil, are formed therein with folding lines with which the insulation sheet can be easily folded in order to cover the coil, thereby it is possible to facilitate the wrapping of the coil with the insulation sheet.

According to fifth to seventh embodiments of the first aspect of the present invention, the folding lines are partly formed on the insulation sheet in the longitudinal direction thereof so as to ensure the shape holding of the insulation sheet.

According to an eighth embodiment of the first aspect of the present invention, insulation end panels in which terminals adapted to be connected with the coil are embedded, are arranged at the end parts of the laminated core segment, and holes and projections with which the insulation panels and the core segments are engaged together are formed in the insulation end panels and the core segments, respectively, or vice versa, thereby it is possible to attach the insulation sheet to the laminated core segment by the insulating end plates with no risk of come-off of the insulation sheet.

Further, according to a second aspect of the present invention, there is provided a method of manufacturing a stator coil, comprising the steps of winding windings on a coil winding part formed between outer and inner diameter parts of a laminated core segment composed of several steel plates which are integrally incorporated one another by welding, and formed in opposite sides thereof with recesses, through the intermediary of a resilient and flexible insulation sheet, so as to form a coil, and wrapping the coil with the insulation sheet so as to cover the exposed side of the coil therewith, thereby to obtain each of a predetermined number of digital pole segments, and coupling the predetermined number of digital pole segments in a ring-like shape. With this method, due to the provision of the resilient and flexible insulation sheet, it is possible to easily increase the density of windings of the stator.

Further, according to a first embodiment of the second aspect of the present invention, the insulation sheet can be attached to the laminated core segment by insulating end panels arranged, longitudinal of the laminated core segments, and then, windings are wound on the coil winding part of the laminated core segment so as to form the coil. With this arrangement, the insulation sheet can be arranged in position by use of the insulating end plates to which terminals of conductor windings of the coil are attached, thereby it is possible to prevent the insulation sheet from coming off.

Further, according to a second embodiment of the second aspect of the present invention, the opposite end parts of the insulation sheet are folded so as to overlap them with each other in order to wrap the coil wound on the coil winding part of the laminated coil segment, and thereafter the opposite end parts of the insulation sheet are joined together by heat-welding or by use of an adhesive, thereby it is possible to prevent the wrapping of the insulation sheet from coming off.

The present invention will be hereinbelow explained with reference to the accompanying drawings in which:

### BRIEF DESCRIPTION OF THE DRAWINGS:

Figs. 1A to 1E are sectional views illustrating an essential part of the a digital pole segment composed of a laminated core segment, an insulation sheet and a coil in a first embodiment of the present invention;
Figs. 2A and 2B are enlarged sectional views for explaining the overlapped parts of the insulation sheet in the digital pole segment shown in Fig. 1;
Figs. 3A to 3D are side views illustrating an essential parts of the insulation sheet used in the digital pole segment shown in Fig. 1, for explaining fold lines on the insulation sheets;
Figs. 4 is a perspective view illustrating a laminated core segment, insulating end panels and an insulation sheet in a second embodiment of the present invention;
Fig. 5 is a perspective view illustrating a digital pole segment in the second embodiment of the present invention; and
Figs. 6A and 6B are sectional views illustrating an essential part of a conventional digital pole segment.

### DESCRIPTION OF THE PREFERRED EMBODIMENTS

### FIRST EMBODIMENT

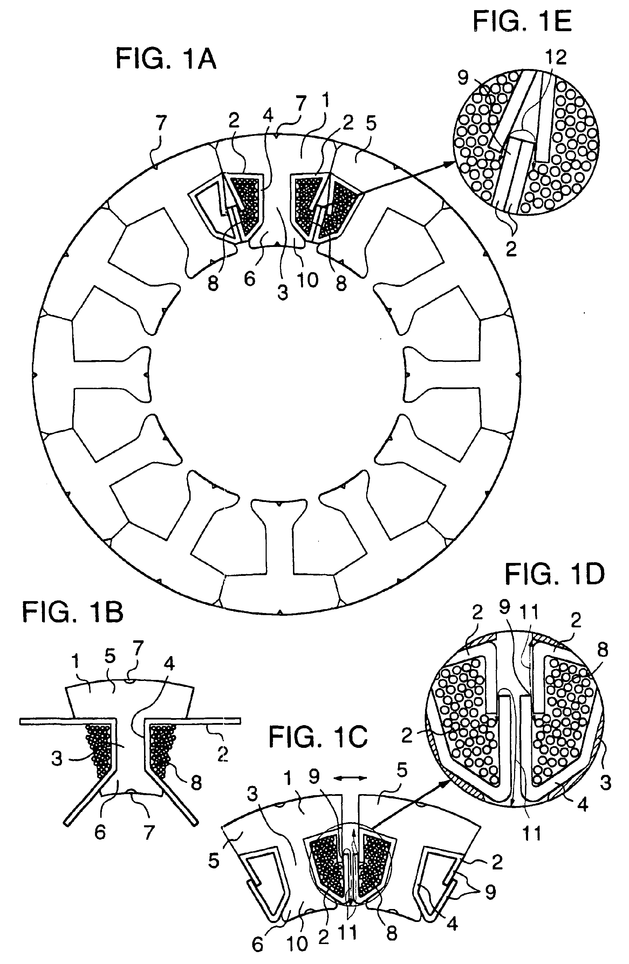

Referring at first to Figs. 1A to 1E, a first embodiment of the present invention will be explained, in which a coil is wound on each of laminated core segments which are circumferentially coupled to one another so as to constitute a motor stator. The motor stator in which a predetermined number of completed digital pole segments are coupled to one another is shown in Fig. 1A. Fig. 1B shows a laminated core segment and a coil wound on the laminated core segment through the intermediary of an insulation sheet while Fig. 1C shows the combination of the digital pole segments in which the coils are wrapped with the insulation sheets.

In more detail, the digital pole segment is composed of a laminated core segment 1 having a coil winding part 3 formed in opposite sides thereof with recesses 4, an insulation sheet 2 inserted in the recesses 4 and made of a resilient and flexible polyester resin film. Further, the core segment 1 has an outer diameter part 5 and an inner diameter part 6, and is composed of several steel plates which are secured to one another through laser-welded parts 7. Windings are wound on the coil winding part 3 of the laminated core segment 1 through the intermediary of the insulation sheet 2 so as to form a coil 8. Further, the exposed part of the coil 8 is wrapped with the insulation sheet 2, and the opposite end parts of the insulation sheet 2 are overlapped with each other so as to obtain overlapping parts 9 which are then heat-welded together. Accordingly, the coil 8 is protected by the insulation sheet 2, and accordingly, it is possible to prevent the coil 8 from being damaged. It is noted that the overlapping parts 9 may be bonded together with the use of an adhesive so as to effect advantages similar to those obtained by the above-mentioned heat-welding.

Further, with the provision of the digital pole segment in which the coil 8 is wrapped with the insulation sheet 2 in the laminated core segment, since the opposite end parts of the insulation sheets 2 of each adjacent ones of several digital pole segments 10 which are to be circumferentially coupled with one another so as to form a motor stator, are overlapped with each other in order to form the overlapping parts 9, it is possible to exhibit the following advantages, that is, the insulation distance 11 can be increased as shown in Fig. 1D, and the interphase insulation distance 12 can be increased as shown in Fig. 1E, thereby it is possible to increase the density of windings of the coil 8.

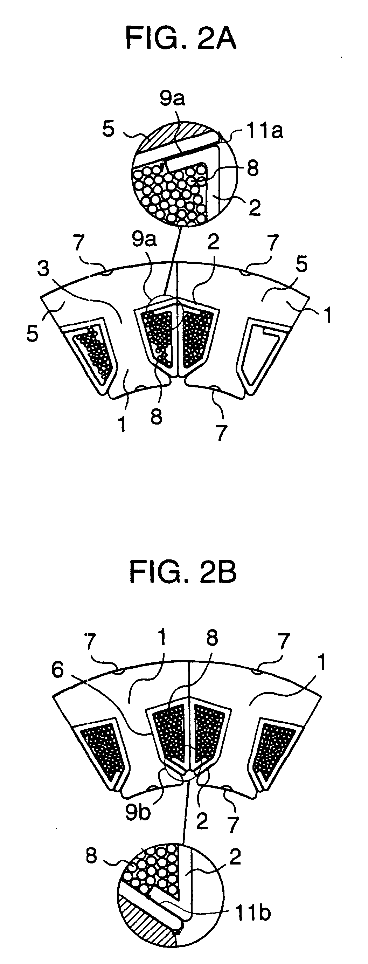

As shown in Fig. 2A, overlapping parts 9 at the opposite end parts of the insulation sheet 2, can be provided at the outer end part 5 of the recess 4 of the laminated core segment 1. With this arrangement, technical effects and advantages similar to that obtained by those arranged in the intermediate part of the recess 4 can be obtained. Further, with the overlapping parts 9a shown in Fig. 2A, it is not necessary to fold an end part of the insulation sheet 2, which is positioned above as viewed in Fig. 2A. That is, it is necessary to fold only the other end part of the insulation sheet 2, positioned below as viewed in Fig. 2A. The insulation distance 11a in the digital pole segment shown in Fig. 2A, is longer than that of a conventional one in which no overlapping parts are provided to the insulator member, thereby the density of windings of the coil 8 can be easily increased.

Further, as shown in Fig. 2B, overlapping parts 9b of the insulation sheet 2 may be provided below the recess 4 as viewed in the figure, as indicated by the arrow, similar to that shown in Fig. 2A. Also in this arrangement, the insulation distance 11b is longer than that of the conventional one in which no overlapping parts are provided.

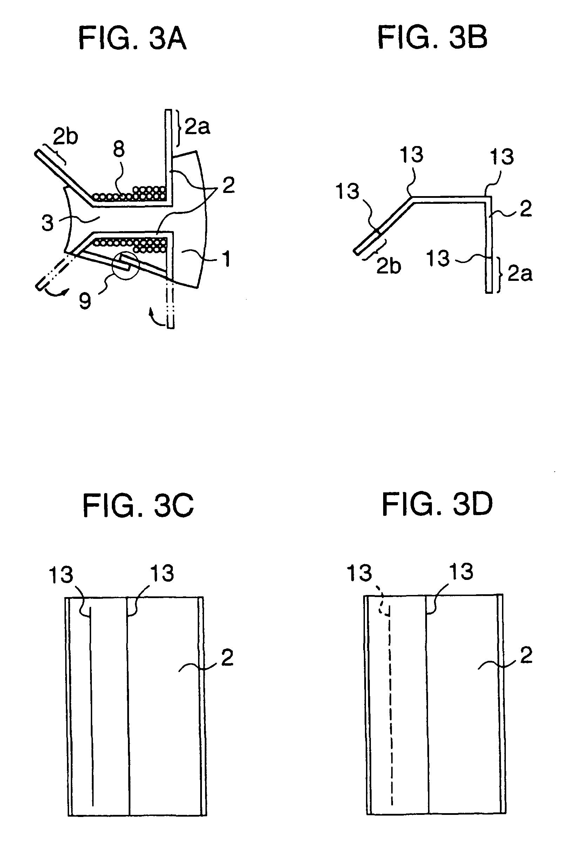

As shown in Figs. 3A to 3C, fold lines 13 may be previously formed on the insulation sheet 2 so as to facilitate the folding of the insulation sheet 2 in order to overlap the opposite end parts 2a, 2b of the insulation sheet 2 with each other for forming the overlapping parts 9 as shown in Fig. 3a. With this arrangement, after the provision of the coil, the folding of the insulation sheet can be made easily and surely while the folding work can be facilitated. Thinned wall lines may be used as the fold lines in order to facilitate the folding of the insulation sheet.

Further, it can be considered that the folding lines 13 located on both outside parts are formed in part, that is, for example, they do not reach the both end parts, without extending over the entire length of the insulation sheet 2, or formed in the form of dotted lines.

With this arrangement in which the folding lines are presented in part so that an indiscrete part is left in the insulation sheet 2, the insulation sheet 2 does not incline forward along the surfaces of the recesses 4 in the laminated core segment 1 before coil winding, and accordingly, the shape hold of the sheet can be ensured, thereby it is possible to easily carry out the coil winding step.

### SECOND EMBODIMENT

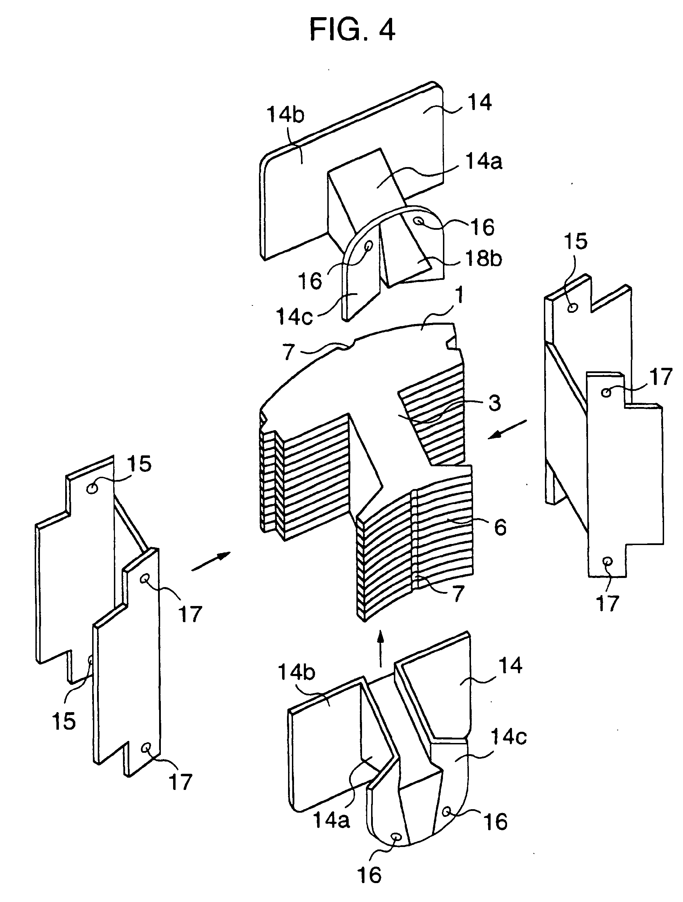

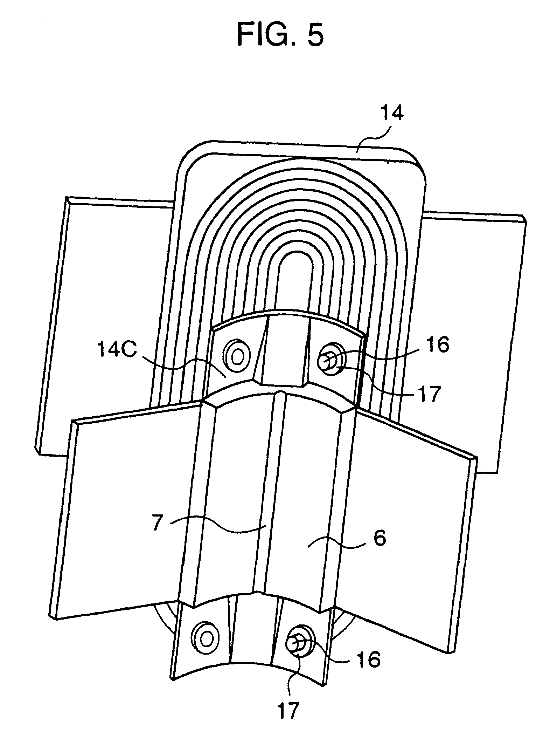

Next explanation will be herein below made of a second embodiment with reference to Fig. 4 and 5 in which like reference numerals are referred to like parts shown in Figs. 1 to 3.

It has been explained in the above-mentioned first embodiment that the insulating end panels are fitted to the opposite end parts of the laminated core segment 1 before the coil 8 is formed on the laminated core segment 1. However, in this second embodiment, not only the insulating sheet 2 is clamped against the laminated core segment: 1 by the end panels but also a special structure is provided as shown in Figs. 4 and 5,

That is, referring to Figs. 4 and 5, each of the end panels 14 has a center channel part 14a fitted onto the coil winding part 3 of the laminated core segment 1 through the intermediary of the insulation sheet 2, an upper projecting part 14b abutting against the outer diameter part 5 of the laminated core segment 1, and a lower projecting part 14c abutting against the inner diameter part 6 of the laminated coil segment. Further, the upper projecting part 14b has protrusions (which is not shown) which are fitted in upper through-holes 15 formed in the upper part of the insulation sheet 2, and the lower projecting part 14c has protrusions 16 which are fitted in through-holes 17 formed in the lower part of the insulation sheet 2. Accordingly, the insulation sheet 2 can be held by the insulating end panels 14 so as to be prevented from coming off, thereby it is possible to carry out the coil winding step with no risk of come-off of the insulation sheet. It goes without saying that the insulation sheet 2 can be also held surely even though the relationship between the through-holes and the protrusions formed respectively in the insulation sheet 2 and the insulating end panels 14 can be reversed.

As mentioned above, according to the present invention, the insulation distance can be made to be larger than that of the conventional one so as to provide a coil having a high dielectric strength and a high density of windings (conductor wire moment of 70%), thereby it is possible to aim at enhancing the productivity of small-sized high power motors, and at reducing the cost of a small-sized high-power motor.

## Claims

1. A motor stator composed of a plurality of digital pole segments which are coupled to one another in a ring-like shape and each comprising:
a laminated core segment (1) composed of several steel plates which are laminated and welded with one another so as to be integrally incorporated with each other, and having an inner diameter part (6) and an outer diameter part (5), and a coil winding part (3) formed between said inner diameter part (6) and said outer diameter part (5) and having recesses (4) formed in opposite sides thereof:
a coil (8) formed by winding windings on said coil winding part (3);
two resilient and flexible insulation sheets (2), each one being interposed between said coil and the surface of said recess in a respective side of said coil winding part (3) of said laminated core segment (1), **characterized in that** the insulation sheets (2) cover an externally exposed surface of said coil (8).

2. A motor stator as set forth in claim 1, wherein each said insulation sheet (2) covers said coil (8) and has opposite end parts which are overlapped with each other.

3. A motor stator as set forth in claim 2, wherein said opposite end parts of said insulation sheet (2) are welded to each other.

4. A motor stator as set forth in claim 2, wherein said opposite end parts of said insulation sheets (2) are bonded to each other by an adhesive.

5. A motor stator as set forth in any of claims 1 to 4, wherein those parts of said insulation sheet (2) which are projected outside of said coil winding part are formed therein with folding lines (13) facilitating folding of said insulation sheet (2) in order to cover said coil (8).

6. A motor stator as set forth in claim 5, wherein said folding lines (13) are formed in part, longitudinally of said insulation sheet (2).

7. A motor stator as set forth in claim 5 or 6, wherein said folding lines (13) are dotted lines.

8. A motor stator as set forth in claim 5 or 6, wherein said folding lines (13) are doted-line-like.

9. A motor stator as set forth in any of claims 1 to 8, wherein said insulation sheets (2) and insulating panels (14) arranged at longitudinal end parts of said laminated core segment are formed therein with holes (15, 17) and protrusions (16) which are engaged with each other.

10. A method of manufacturing a motor stator comprising the steps of:
winding windings on a coil winding part (3) which is formed between outer (5) and inner diameter parts (6) of a laminated core segment (1) formed of several steel plates which are laminated one upon another, which has recesses (4) on opposite sides thereof, through the intermediary of two resilient and flexible insulation sheets (2) so as to form a coil (8):
covering an exposed part of said coil (8) with said insulation sheets (2) so as to complete a digital pole segment;
preparing a predetermined number of said digital pole segments; and
coupling said predetermined number of said digital pole segments with one another in a ring-like shape.

11. A method as set forth in claim 10, wherein insulating end panels (14) are arranged longitudinally of said laminated core segment (1) and said insulation sheet (2) is arranged in said laminated core segment (1), and in this condition, said windings are wound on said coil winding part (3) so as to form said coil (8).

12. A method as set forth in claim 10 or 11, wherein said insulation sheet (2) is folded so as to wrap said coil (8) formed on said coil winding part (3) of said laminated core segment (1), and opposite end parts of said insulation sheet (2) are overlapped with each other, and are then joined together by heat-welding or by use of an adhesive.

## Patentansprüche

1. Motorstator, bestehend aus einer Mehrzahl digitaler Polsegmente, die in ringartiger Form aneinander gekoppelt sind und jeweils Folgendes umfassen:
ein laminiertes Kernsegment (1), das aus mehreren Stahlplatten besteht, die miteinander laminiert und verschweißt sind, um integral miteinander verbunden zu sein, und das ein Innendurchmesserteil (6) und ein Außendurchmesserteil (5) und ein Spulenwindungsteil (3) hat, das zwischen dem Innendurchmesserteil (6) und dem Außendurchmesserteil (5) geformt ist und das Aussparungen (4) aufweist, die in gegenüberliegenden Seiten desselben gebildet werden:
eine Spule (8), die durch Winden von Windungen auf dem Spulenwindungsteil (3) gebildet wird;
zwei elastische und flexible Isolierfolien (2), die jeweils zwischen der Spule und der Oberfläche der Aussparung in einer jeweiligen Seite des Spulenwindungsteils (3) des laminierten Kernsegments (1) angeordnet sind, **dadurch gekennzeichnet, dass** die Isolierfolien (2) eine außen exponierte Oberfläche der Spule (8) abdecken.

2. Motorstator nach Anspruch 1, wobei jede Isolierfolie (2) die Spule (8) abdeckt und gegenüberliegende Endteile besitzt, die einander überlappen.

3. Motorstator nach Anspruch 2, wobei die gegenüberliegenden Endteile der Isolierfolie (2) aneinander geschweißt sind.

4. Motorstator nach Anspruch 2, wobei die gegenüberliegenden Endteile der Isolierfolien (2) mittels eines Klebstoffes aneinander geklebt sind.

5. Motorstator nach einem der Ansprüche 1 bis 4, wobei in jenen Teilen der Isolierfolie (2), die außerhalb des Spulenwindungsteils vorstehen, Faltlinien (13) geformt sind, welche das Falten der Isolierfolie (2) erleichtern, damit die Spule (8) abgedeckt ist.

6. Motorstator nach Anspruch 5, wobei die Faltlinien (13) in einem Teil der Isolierfolie (2) in Längsrichtung geformt sind.

7. Motorstator nach Anspruch 5 oder 6, wobei die Faltlinien (13) gepunktete Linien sind.

8. Motorstator nach Anspruch 5 oder 6, wobei die Faltlinien (13) gepunkteten Linien ähnlich sind.

9. Motorstator nach einem der Ansprüche 1 bis 8, wobei die Isolierfolien (2) und Isoliertafeln (14), angeordnet an longitudinalen Endteilen des laminierten Kernsegments, mit Löchern (15, 17) und Vorsprüngen (16) darin geformt sind, die miteinander verbunden sind.

10. Verfahren zur Herstellung eines Motorstators, das die folgenden Schritte umfasst:
Winden von Windungen auf einem Spulenwindungsteil (3), das zwischen einem Außen- (5) und einem Innendurchmesserteil (6) eines laminierten Kernsegments (1) geformt ist, das aus mehreren Stahlplatten, welche aufeinander laminiert sind, gebildet wird und das Aussparungen (4) auf gegenüberliegenden Seiten desselben hat, vermittels zweier elastischer und flexibler Isolierfolien (2), um eine Spule (8) zu bilden:
Abdecken eines exponierten Teils der Spule (8) mit den Isolierfolien (2), um ein digitales Polsegment fertig zu stellen;
Fertigen einer vorgegebenen Anzahl der digitalen Polsegmente; und
Aneinanderkoppeln der vorgegebenen Anzahl der digitalen Polsegmente in ringartiger Form.

11. Verfahren nach Anspruch 10, wobei isolierende Endtafeln (14) längs des laminierten Kernsegments (1) angeordnet werden und die Isolierfolie (2) in dem laminierten Kernsegment (1) angeordnet wird, und in diesem Zustand die Windungen auf dem Spulenwindungsteil (3) gewunden werden, um die Spule (8) zu bilden.

12. Verfahren nach Anspruch 10 oder 11, wobei die Isolierfolie (2) gefaltet wird, um die Spule (8), die auf dem Spulenwindungsteil (3) des laminierten Kernsegments (1) geformt ist, zu umwickeln, und gegenüberliegende Endteile der Isolierfolie (2) übereinander geschlagen werden, und dann mittels Thermoschweißen oder durch Verwendung eines Klebestoffs zusammengefügt werden.

## Revendications

1. Stator de moteur composé d'une pluralité de segments polaires digitales qui sont couplés les uns aux autres en une forme comme un anneau et chacun comprenant:
un segment central stratifié (1) composé de plusieurs plaques en acier qui sont stratifiées et soudées les unes aux autres de sorte à être intégralement incorporées les unes avec les autres, et ayant une partie de diamètre interne (6) et une partie de diamètre externe (5), et une partie de bobinage (3) formée entre ladite partie de diamètre interne (6) et ladite partie de diamètre externe (5) et ayant des évidements (4) formés dans des côtés opposés correspondants;
une bobine (8) formée en enroulant des enroulements sur ladite partie de bobinage (3);
deux feuilles d'isolation résilientes et flexibles (2), chacune étant interposée entre ladite bobine et la surface dudit évidement dans un côté respectif de ladite partie de bobinage (3) dudit segment central stratifié (1), **caractérisé en ce que** les feuilles d'isolation (2) couvrent une surface exposée extérieurement de ladite bobine (8).

2. Stator de moteur selon la revendication 1, dans lequel chaque dite feuille d'isolation (2) couvre ladite bobine (8) et a des parties d'extrémités opposées qui sont en chevauchement l'une avec l'autre.

3. Stator de moteur selon la revendication 2, dans lequel lesdites parties d'extrémités opposées de ladite feuille d'isolation (2) sont soudées l'une à l'autre.

4. Stator de moteur selon la revendication 2, dans lequel lesdites parties d'extrémités opposées desdites feuilles d'isolation (2) sont liées les unes aux autres par un adhésif.

5. Stator de moteur selon l'une quelconque des revendications 1 à 4, dans lequel les parties de ladite feuille d'isolation (2) qui sont projetées à l'extérieur de ladite partie de bobinage y sont formées avec des lignes de pliage (13) facilitant le pliage de ladite feuille d'isolation (2) afin de couvrir ladite bobine (8).

6. Stator de moteur selon la revendication 5, dans lequel lesdites lignes de pliage (13) sont formées en partie, longitudinalement à ladite feuille d'isolation (2).

7. Stator de moteur selon la revendication 5 ou 6, dans lequel lesdites lignes de pliage (13) sont des lignes pointillées.

8. Stator de moteur selon la revendication 5 ou 6, dans lequel lesdites lignes de pliage (13) sont comme une ligne pointillée.

9. Stator de moteur selon l'une quelconque des revendications 1 à 8, dans lequel lesdites feuilles d'isolation (2) et panneaux d'isolation (14) agencés à des parties d'extrémités longitudinales dudit segment central stratifié y sont formées avec des trous (15, 17) et des protubérances (16) qui sont engagés les uns avec les autres.

10. Procédé de fabrication d'un stator de moteur comprenant les étapes de:
enrouler des enroulements sur une partie de bobinage (3) qui est formée entre des parties de diamètre externe (5) et interne (6) d'un segment central stratifié (1) formé de plusieurs plaques en acier qui sont stratifiées l'une sur l'autre, qui a des évidements (4) sur des côtés opposés correspondants, par l'intermédiaire de deux feuilles d'isolation résilientes et flexibles (2) de sorte à former une bobine (8);
couvrir une partie exposée de ladite bobine (8) avec lesdites feuilles d'isolation (2) de sorte à compléter un segment polaire digitale;
préparer un nombre prédéterminé desdits segments polaires digitales; et
coupler ledit nombre prédéterminé desdits segments polaires digitales les uns avec les autres en une forme comme un anneau.

11. Procédé selon la revendication 10, dans lequel des panneaux d'extrémité isolants (14) sont agencés longitudinalement au dit segment central stratifié (1) et ladite feuille d'isolation (2) est agencée dans ledit segment central stratifié (1), et dans cette condition, lesdits enroulements sont enroulés sur ladite partie de bobinage (3) de sorte à former ladite bobine (8).

12. Procédé selon la revendication 10 ou 11, dans lequel ladite feuille d'isolation (2) est pliée de sorte à envelopper ladite bobine (8) formée sur ladite partie de bobinage (3) dudit segment central stratifié (1), et des parties d'extrémités opposées de ladite feuille d'isolation (2) sont en chevauchement l'une avec l'autre, et sont ensuite jointes ensemble par thermo soudure ou par usage d'un adhésif.
